Europäisches Patentamt

(19) European Patent Office

Office européen des brevets

(11) Publication number: **0 089 238**
**B1**

(12) **EUROPEAN PATENT SPECIFICATION**

(45) Date of publication of patent specification: **18.05.88**

(51) Int. Cl.⁴: **G 02 B 26/02**

(21) Application number: **83301446.7**

(22) Date of filing: **16.03.83**

(54) **Molded optical keyboard having fiber optic keys.**

(30) Priority: **16.03.82 US 358824**

(43) Date of publication of application:
**21.09.83 Bulletin 83/38**

(45) Publication of the grant of the patent:
**18.05.88 Bulletin 88/20**

(84) Designated Contracting States:
**BE DE FR GB NL SE**

(56) References cited:
**US-A-3 519 116**

**ELECTRONICS & COMMUNICATIONS IN
JAPAN, vol. 64, no. 12, December 1981, pages
86-95, Scripta Publishing Co., Silver Spring,
Maryland, US; H. YAMAMOTO et al.: "10 x 10
Optical matrix switch"**

**PATENTS ABSTRACTS OF JAPAN, vol. 5, no.
32 (P-50)704r, 27th February 1981, page 89 P
50; JP-A-55 155 302 (NIPPON DENSHIN
DENWA KOSHA) 03-12-1980**

(73) Proprietor: **UNISYS CORPORATION
Burroughs Place
Detroit Michigan 48232 (US)**

(72) Inventor: **Mosier, Carl E.
1553 Village Way
Orange Park Florida 32073 (US)**
Inventor: **Ely, Richard I.
2703 Woodland Drive
Orange Park Florida 32073 (US)**
Inventor: **Subbarao, Wunnava V.
10425 S.W. 143rd Ct.
Miami Florida 33186 (US)**

(74) Representative: **Kirby, Harold Douglas Benson
et al
G.F. Redfern & Company Marlborough Lodge 14
Farncombe Road
Worthing West Sussex BN11 2BT (GB)**

(56) References cited:
**PATENTS ABSTRACTS OF JAPAN, vol. 5, no.
32 (P-50)704r, 27th February 1981, page 138 P
50; JP-A-55 156 902 (FUJITSU K.K.) 06-12-1980**

Note: Within nine months from the publication of the mention of the grant of the European patent, any person may
give notice to the European Patent Office of opposition to the European patent granted. Notice of opposition shall
be filed in a written reasoned statement. It shall not be deemed to have been filed until the opposition fee has been
paid. (Art. 99(1) European patent convention).

Courier Press, Leamington Spa, England.

## Description

### Cross reference to related applications

The present application is related to the following listed applications dealing with related subject matter all from the same applicant as the present application and filled concurrently herewith.

"Fiber Wrap Keyboard and Switch", EP—A2—89239, with inventors Wunnava V. Subbarao, Richard I. Ely, Carl E. Mosier and James E. Andree;

"Multi-plane Optical Membrane Switch Apparatus", EP—A2—89236, with inventors Richard I. Ely and Wunnava V. Subbarao;

"Single Plane Optical Membrane Switch and Keyboard", EP—A2—89237 with inventor Richard I. Ely.

"Molded Optical Waveguide Switching Apparatus", EP—A2—89235 with inventor Richard I. Ely.

### Background of the invention

#### 1. Field of the invention

The present invention relates to photo-optical keyboards and more specifically to a photo-optical keyboard in which the component assemblies comprised of molded fiber optical elements effective to produce a matrix keyboard.

#### 2. Description of prior art

Photo-optical keyboard apparatus is known and can be made to work effectively and accurately. However, efforts to economize on the cost of construction, fabrication and assembly have just about reached a point of diminishing returns. Decreasing the total number of parts whether movable or fixed is a typical method of reducing the fabrication and assembly costs rather significantly. Automating the fabrication and assembly is still another-way of reducing the overall manufacturing cost of the keyboard apparatus. However, presently available photo-optical keyboards do not lend themselves readily to automatic techniques of fabrication and assembly. It is an object therefore of the present invention to solve these and other associated problems in a new, novel and heretofore unobvious manner.

It is another object of the present invention to provide an optical keyboard wherein all the parts are of molded plastic material.

Still a further object of the present invention is the design and fabrication of a photo-optical keyboard which is completely compatible with automation techniques and wherein the only moving part in the keyboard is the key which is also a fiber optic assembly.

### Summary of the invention

The present invention solves the foregoing problems by providing a molded fiber optic keyboard and key switch apparatus comprising a plurality of molded fiber optic members each one of which includes a plurality of parallel, individual, light-conducting elements, first ends of the light-conducting elements of each fiber optic member being longitudinally offset with respect to one another, said fiber optic members being arranged with a first plurality of mutually parallel members disposed orthogonally across a second plurality of mutually parallel members so that said first ends of said first plurality are arranged in adjacent relationships with the first ends of said second plurality, thereby forming a matrix array of adjacent pairs of first ends, and light blocking and unblocking means being interposed between each adjacent pair of first ends and being effective, in one position, to interrupt light passing through the respective light-conducting element from a light generator to a light receptor, the light generator and the light receptor being disposed adjacent to respective second ends of the corresponding first and second pluralities of fiber optic members.

### Brief description of the drawings

Figure 1 is a top plan view schematically illustrating a matrix keyboard in accordance with the present invention;

Figure 2 is a schematic illustration of the fiber optic key for the keyboard of Figure 1 with the key shown in the inactive (light blocking) position; and

Figure 3 is a view similar to Figure 2 but showing the fiber optic key in the active or light unblocking position.

### Brief description of the preferred embodiment

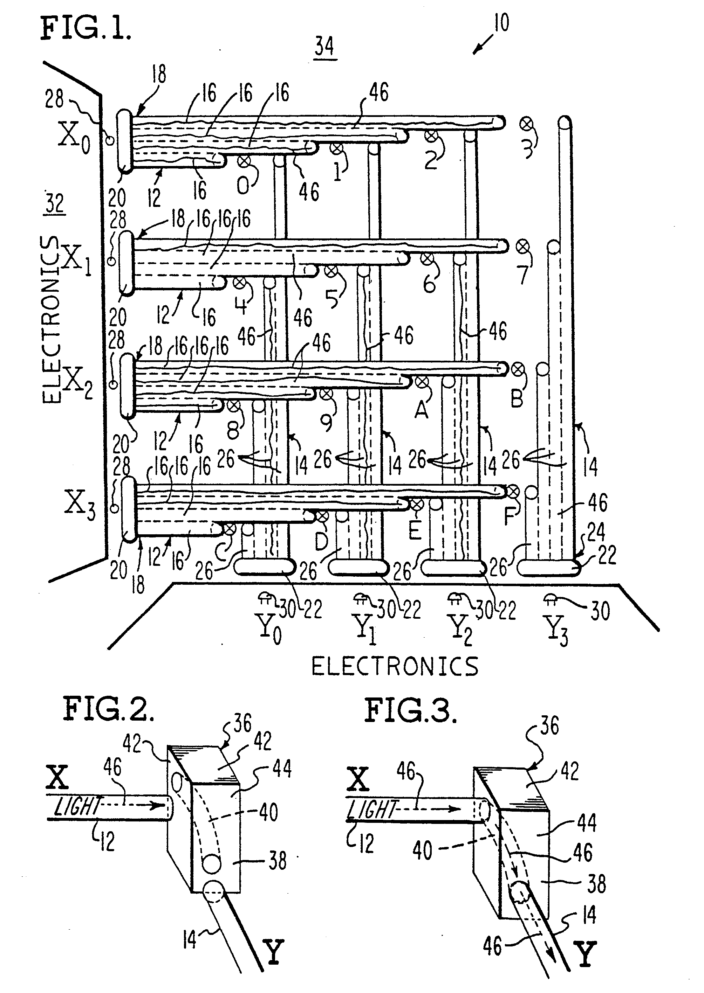

A 4×4 matrix keyboard is illustrated in Figure 1 and comprises a multiple layer, sandwich construction. The matrix 10 is fabricated as a plurality of molded optical channel members 12 and 14 arranged with the x-row channel members 12 disposed in flat planar relation to the y-column channel members 14 and at right angles to the y channel members. The x and y members are in two different planes. Separating means is disposed between the two x and y channel members to prevent unwanted light coupling therebetween and the entire structural combination is rigidly supported on a base member of plastic or similar material (not shown).

As seen in Figure 1, the optical light guide channels 12 and 14, each comprise a molded light conducting structure of material having a refractive index sufficiently high to enable light to pass therealong without interference or undue attenuation. The fiber mold can have a circular cross section as shown or can be square or rectangular depending upon the circumstances of its use or the requirements thereof. Each channel member 12 and 14 is molded to form a group or plurality of individual light pipes or light conducting paths 16 with the light pipes in each light conducting channel member 12 and 14 stair stepped with respect to each other such that each adjacent contiguous parallel pipe is slightly greatly in extent or length than its neighbor starting at the light input end 18 extending outwardly for any desired length. In the present embodiment only four steps are formed and described but many more steps obviously would be necessary or required for a "full" keyboard.

Each light entering end 18 of each channel member 12 is provided with a light magnifying lens member 20 for increasing the amount of light entering each light conducting pipe or path of each channel.

Arranged immediately beneath the horizontal row of channels 12 and slightly separated therefrom are molded fiber optic light channels 14. Channels 14 are disposed at right angles to the channels 12 and are each provided with a light magnifying lens 22 at the light terminating end 24 thereof. The individual light pipes or light conducting paths 26 of channels 14 are likewise stair stepped as were the pipes 16 of channels 12. Each step of channels 14 y column is disposed adjacent to but slightly separated from its neighbor step in the x row such that the open ends of similar length pipes in the y columns are adjacent to the open ends of similar length pipes in the x row.

Individual light generating means 28 are disposed at the light entering end 18 of each row channel 12. Likewise individual light receptor means 30 are disposed at the output or terminating end 24 of each y column channel 14. Suitable electronic circuitry 32 and 34 for the x and y channels 12 and 14 respectively are employed to control the input and output signals generated by the light generating and receiving devices, respectively.

In order to switch the light from an x row to a y column, a fiber key structure 36 is provided. Each key 36 comprises a rigid member 38 having a light conducting channel or aperture 40 extending from one vertical side wall 44. The channel 40 is angularly curved from a higher level at the x row coordinate to a lower level at the y column coordinate so as to accommodate the slight planar displacement or separation of the rows and columns of the light conducting channels 12 and 14. The two oppositely disposed apertures connected by the conducting light channel 40 are offset so that the key 42 is permitted to have two physical positions related to the light conducting channels 12 and 14. In the so called inactive or inoperative "home" position the body of the key 36 blocks the light from the light generating members 28 to the light receptor means 30. This generally referred to as the "up" position of the key on a conventional keyboard. In the active or depressed position the key body 38 is moved so as to align an x row output end of the light conducting fiber with an input end of a y column light conducting fiber effectively passing light from the light generating means 28 to the light receptor means 30. This position is generally referred to as the "down" position on a conventional keyboard.

As illustrated in Figure 1, light 46 from each light generator 28 is distributed into each x row optical channel 12, each light conductive pipe of which is basically a molded light conducting member. Thus light rays 46 are distributed to all the positions along each x row channel. Thus as seen in Figure 3 when a key 36 is depressed, light 46 is coupled (through the channel 40 in the key) from a x row to a y column thereby indicating, in accordance with the associated electronic circuitry, which key has been depressed. For example, when $x_2$ is activated and $y_2$ picks up the light the indication is that the "A" key was depressed, and so on, for each of the other keys in the 4×4 matrix arrangement.

There has thus been described a new, novel, useful and unobvious keyboard matrix structure which easily can be molded from plastic material. In addition even the key can be molded so as to provide the length channel or path therethrough. If desired an optional optical coupling can be provided by means of a short length of fiber optic cable (0.4 inches per key position) in place of the molded aperture or channel 36 through the key.

As can be seen from Figure 1, the light spreads over the entire x channel. Activation of plurality of keys will couple light into corresponding y channels. If the light sources are scanned across the x channels (one at a time), the light sensing at y channels will effectively provide individual identification of the keys, even under multiple closure of the keys. This will thus provide for N key rollover.

**Claims**

1. Molded fiber optic keyboard and key switch apparatus comprising a plurality of molded fiber optic members (12, 14) each one of which includes a plurality of parallel, individual, light-conducting elements (16, 26), first ends of the light-conducting elements of each fiber optic member being longitudinally offset with respect to one another, said fiber optic members being arranged with a first plurality of mutually parallel members (16) disposed orthogonally across a second plurality of mutually parallel members (26) so that said first ends of said first plurality are arranged in adjacent relationships with the first ends of said second plurality, thereby forming a matrix array of adjacent pairs of first ends, and light blocking and unblocking means (36) being interposed between each adjacent pair of first ends and being effective, in one position, to interrupt light passing through the respective light-conducting element from a light generator (28) to a light receptor (30), the light generator and the light receptor being disposed adjacent to respective second ends of the corresponding first and second pluralities of fiber optic members.

2. Apparatus in accordance with Claim 1 further including a lens structure (20, 22) positioned at the second end of each molded fiber optic member.

3. Apparatus in accordance with Claim 2, wherein said lens structure and its fiber optical member are molded in a single integral piece.

4. Apparatus in accordance with any of the preceding Claims, wherein said light blocking an unblocking means (36) comprises a molded optic member (38) having a curvilinearly angled light passing channel (40) extending therethrough.

5. Apparatus in accordance with any of the preceding Claims, further including means disposed between said first and second plurality of optic members for separating the same preventing unwanted light coupling therebetween.

6. Apparatus in accordance with Claim 4, wherein said curvilinear light passing channel (40) is such that said light blocking member (38) intercepts light in said one position and passes light in another position in which said curvilinear light passing channel extends between the corresponding pair of adjacent first ends.

7. Apparatus in accordance with any of the preceding Claims, further including electronic circuit means for multiplexing said light source and said receptors effective to limit the number of individual components required thereby.

**Patentansprüche**

1. Tastatur- und Tastschalteranordnung mit einer Mehrzahl von geformten Faseroptikgliedern (12, 14), die je aus einer Mehrzahl von parallelen, einzelnen Lichtleitelementen (16, 26) bestehen; bei der die ersten Enden der Lichtleitelemente jedes Faseroptikgliedes in Längsrichtung gegeneinander versetzt sind; bei der die Faseroptikglieder als eine erste Anzahl von zueinander parallelen Gliedern (16) orthogonal über einer zweiten Anzahl von zueinander parallelen Gliedern (26) derart angeordnet ist, daß die ersten Enden der ersten Anzahl neben den ersten Enden der zweiten Anzahl liegen und eine Matrixanordnung von nebeneinanderliegenden Paaren von ersten Enden bilden; daß Lichtsteuerelemente (36) zwischen jedem nebeneinanderliegenden Paar von ersten Enden angeordnet sind und in einer Position das von einer Lichtquelle (28) durch sas entsprechende Lichtleitelement geleitete Licht zu einem Lichtempfänger (30) unterbrechen; und daß der Lichtsender und der Lichtempfänger neben den zweiten Enden der entsprechenden ersten und zweiten Anzahl von Faseroptikgliedern angeordnet sind.

2. Anordnung nach Anspruch 1, gekennzeichnet durch eine Linsenanordnung (20, 22) am zweiten Ende jedes der geformten Faseroptikglieder.

3. Anordnung nach Anspruch 2, dadurch gekennzeichnet, daß die Linsenanordnung und das dazugehörige Faseroptikglied als einziges integrales Bauteil geformt sind.

4. Anordnung nach einem oder mehreren der vorstehenden Ansprüche, dadurch gekennzeichnet, daß die Lichtsteuerelemente (36) aus einem geformten Optikglied (38) bestehen, durch das ein um einen Winkel gekrümmter Lichtleitfad (40) hindurchführt.

5. Anordnung nach einem oder mehreren der vorstehenden Ansprüche, gekennzeichnet durch ein zwischen der ersten und zweiten Anzahl von Optikgliedern angeordnetes Mittel zum Trennen dieser Glieder voneinander und zum Verhindern von unerwünschten Lichtkopplungen zwischen diesen.

6. Anordnung nach Anspruch 4, dadurch gekennzeichnet, daß der gekrümmte Lichtleitpfad (40) derart ausgebildet ist, daß das Lichtsteuerelement (38) in seiner einen Position das Licht abfängt, während in seiner anderen Position der gekrümmte Lichtleitpfad zwischen den entsprechenden Paar von nebeneinanderliegenden ersten Enden liegt.

7. Anordnung nach einem oder mehreren der vorstehenden Ansprüche, gekennzeichnet durch elektronisch Schaltungsmittel zum Multiplexen der Lichtquellen und der Lichtempfänger, um die Anzahl der notwendigen einzelnen Komponenten zu begrenzen.

**Revendications**

1. Clavier à fibres optiques moulées et à touches de commutation caractérisé en ce qu'il comprend un ensemble d'éléments à fibres optiques moulées (12, 14) formés chacun d'éléments photoconducteurs (16, 26) individuels parallèles avec une première extrémité de chaque élément photoconducteur de chaque fibre optique longitudinalement décalée par rapport à l'autre, ces éléments en fibres optiques étant répartis de façon qu'un premier ensemble d'éléments respectivement parallèles (16) soit disposé perpendiculairement par rapport à un second ensemble d'éléments respectivement parallèles (26) pour que le première extrémité des éléments du premier ensemble se trouve au voisinage de la première extrémité des éléments du second ensemble et forme ainsi une répartition en matrice de paires de premières extrémités avec interposition d'éléments de blocage et de déblocage de lumière (36) entre chaque paire adjacente des premières extrémités, actives dans une position de manière à bloquer le passage de la lumière à travers l'élément photoconducteur respectif en provenance du générateur de lumière (28) jusqu'au récepteur de lumière (30), le générateur de lumière et le récepteur de lumière étant situés au voisinage des secondes extrémités du premier et du second ensemble d'éléments à fibres optiques.

2. Clavier selon la revendication 1, caractérisé en ce qu'il comporte en outre des lentilles (20, 22) au niveau de la seconde extrémité de chaque élément à fibres optiques moulées.

3. Clavier selon la revendication 2, caractérisé en ce que la structure à lentille et l'élément à fibres optiques correspondants sont moulés en une seule pièce.

4. Clavier selon l'une quelconque des revendications précédentes, caractérisé en ce que le moyen de blocage et de déblocage du passage de la lumière (36) est constitué par un élément optique moulé (38) traversé par un canal de lumière curviligne, (40).

5. Clavier selon l'une quelconque des revendications précédentes, caractérisé en ce qu'il comporte en outre des moyens placés entre le premier et le second ensemble d'éléments optiques pour les séparer et éviter le couplage de lumière parasite entre les éléments.

6. Clavier selon la revendication 4, caractérisé en ce que le canal de passage de lumière (40)

**0 089 238**

curviligne est tel que l'élément de blocage de lumière (38) intercepte la lumière lorsqu'il se trouve dans une position et laisse passer la lumière lorsqu'il se trouve dans l'autre position, le canal curviligne de passage de lumière reliant deux paires correspondantes de premières extrémités adjacentes.

7. Clavier selon l'une quelconque des revendications précédentes, caractérisé en ce qu'il comporte en outre un circuit électronique pour multiplexer les sources lumineuses et les récepteurs de manière à limiter le nombre de composants individuels nécessaires.

0 089 238

FIG.1.

FIG.2.

FIG.3.